# EUROPÄISCHE PATENTSCHRIFT

(11) **EP 0 941 257 B1**
(45) Veröffentlichungstag und Bekanntmachung des Hinweises auf die Patenterteilung: **03.05.2000**
(21) Anmeldenummer: 97951908.9
(22) Anmeldetag: 18.11.1997
(51) Int. Cl.: C08F 8/00, C08F 255/02

(54) **POLAR MODIFIZIERTE POLYPROPYLEN-WACHSE**
POLAR MODIFIED POLYPROPYLENE WAXES
CIRES DE PROPYLENE POLAIREMENT MODIFEES

(30) Priorität: 26.11.1996 DE 19648895
(43) Veröffentlichungstag der Anmeldung: 15.09.1999
(73) Patentinhaber: Clariant GmbH, 65929 Frankfurt am Main (DE)
(72) Erfinder: HOHNER, Gerd, D-86368 Gersthofen (DE)
(86) Internationale Anmeldenummer: EP9706415
(87) Internationale Veröffentlichungsnummer: WO9823652

(56) Entgegenhaltungen:
- EP-A- 0 024 034
- EP-A- 0 251 771
- WO-A-89/01951
- WO-A-93/24539
- WO-A-94/04577
- WO-A-96/06120
- DE-A- 4 308 587
- DE-C- 19 500 426
- FR-A- 1 429 618
- US-A- 4 159 287

## Beschreibung

Die Erfindung betrifft polar modifizierte Polypropylenwachse auf der Basis von unpolaren Polypropylenwachs-Vorstufen, wobei letztere im Aufbauverfahren mit Hilfe von Katalysatoren des Ziegler- oder Metallocentyps hergestellt werden.

Polar modifizierte Polyolefinwachse finden vielfältige Verwendung u.a. zur Herstellung wässriger Dispersionen für den Pflegemittel- und den technischen Sektor, als Additive bei der Verarbeitung von Kunststoffen oder als Rezepturkomponente in hot melt-Massen. Die Modifizierung von Polyethylenwachsen geschieht in der Regel durch Oxidation mit Luft. Im Falle von Polymerwachsen, die auf höheren Olefinen, beispielsweise Propylen, basieren, ist dieses Verfahren nicht anwendbar, da die Luftoxidation hier zu weichen, verfärbten, für die meisten Anwendungen nicht brauchbaren Produkten führt. Bei derartigen Wachsen kann die für die genannten Anwendungen erforderliche polare Modifizierung stattdessen durch radikalische Reaktion mit polaren, olefinische Doppelbindungen enthaltenden Verbindungen erreicht werden.

Aus US 3,481,910 sind polare wachsartige Polyolefine bekannt, die durch Umsetzung von Polyolefinkohlenwasserstoffen mit ungesättigten Polycarbonsäuren oder deren Derivaten in einer Rührapparatur gewonnen werden. Die für die Modifizierung eingesetzten Polyolefinwachse werden durch thermischen Abbau von hochmolekularen Polyolefin-Kunststoffen hergestellt. Die Reaktionstemperaturen bei der Modifizierung liegen zwischen 200 und 400°C, in den Beispielen nicht unter 325°C. Nachteilig ist zunächst der für die Bereitstellung des - zweistufig durch Aufbau und anschließenden Abbau gewonnenen - Wachsrohstoffs erforderliche hohe Aufwand. Nachteilig sind weiterhin die für die eigentliche Modifizierungsreaktion notwendige hohe Temperatur und die damit verbundene Gefahr der thermischen Schädigung der Umsetzungsprodukte.

In US 3,480,580 und US 5,290,954 werden weitere Verfahren zur polaren Modifizierung von Polyolefinwachsen aus dem thermischem Abbau von Polyolefin-Kunststoffen beschrieben. Die Umsetzung mit der polaren Komponente findet in Gegenwart eines Radikalbildners bei Temperaturen zwischen 150 und 300°C bzw. unterhalb von 190°C statt. Die Modifizierungsreaktion ist mit einem Anstieg der Schmelzviskosität verbunden, die auf gleichzeitig ablaufende Vernetzungsvorgänge hinweist. Wie aus den in US 5,290,954 angeführten Beispielen hervorgeht, ist die Reproduzierbarkeit der Produkte im Hinblick auf ihre Schmelzviskosität und ihre Homogenität unbefriedigend. Auch besteht bei unkontrolliert ansteigender Viskosität bzw. bei Vernetzung des Reaktionsgemisches das Risiko einer Blockierung des Rührwerks.
In US 4,041,056 werden Produkte beschrieben, die durch Umsetzung von Paraffin- und Polyethylenwachsen mit Maleinsäureanhydrid und verwandten Verbindungen hergestellt werden. Die Möglichkeit der entsprechenden Modifikation von Polypropylenwachsen nicht näher bestimmter Herkunft wird im Textteil zwar erwähnt, jedoch nicht weiter ausgeführt und ist nicht eigentlicher Gegenstand der Patentanmeldung.

Es bestand somit die Aufgabe, unter Umgehung der oben geschilderten Nachteile ein einfach, wirtschaftlich und reproduzierbar herstellbares polares Polypropylenwachs zur Verfügung zu stellen.

Es wurde gefunden, daß Polypropylenwachse, die auf ökonomische Weise in direkter Polymerisation mittels Katalysatoren vom Ziegler- oder Metallocentyp hergestellt wurden, mit geeigneten Monomeren unter Zusatz von Peroxiden bei vergleichsweise niedrigen Temperaturen mit guter Reproduzierbarkeit und Homogenität ohne Gefahr einer Viskositätserhöhung sowie ohne Risiko der thermischen Schädigung zu polaren Wachsen umgesetzt werden können.

Gegenstand der Erfindung ist daher ein polar modifiziertes teilkristallines Propylen-Homo- oder Copolymerwachs mit einer Säure- oder Verseifungszahl von 0,5 bis 120 mg KOH/g, einer Schmelzviskosität von 20 bis 50000 mPa.s/170°C und einem Erweichungspunkt (Ring/Kugel) von 90 bis 165°C, hergestellt durch Umsetzung eines unpolaren Propylen-Homo- oder Copolymerwachses mit einer α,β-ungesättigten Carbonsäure oder deren Derivaten in Gegenwart von Radikalbildnern, dadurch gekennzeichnet, daß das unpolare Polypropylenwachs durch direkte Polymerisation von Propylen oder Copolymerisation von Propylen mit höheren 1-Olefinen unter Verwendung von Katalysatoren des Ziegler- oder Metallocentyps hergestellt wurde und einen Erweichungspunkt (Ring/Kugel) von 90 bis 165°C aufweist.

Die Synthese der unmodifizierten, also unpolaren Ausgangswachse mit Hilfe von Katalysatoren des Ziegler- oder Metallocentyps ist aus zahlreichen Dokumenten bekannt. So ist z.B. aus DE-A-2329641 ein Verfahren bekannt, wonach α-Olefine mit Ziegler-Katalysatoren in direkter Aufbaureaktion zu Homo- oder Copolymerwachsen polymerisiert werden können. In DE-A-3148229 ist die Herstellung hochkristalliner Polypropylenwachse durch Polymerisation ebenfalls unter Verwendung von titanhaltigen Katalysatoren beschrieben, desgleichen in EP-A-480190. Propylen-Homo- und Copolymerwachse sind darüber hinaus auch mit Metallocen-Katalysatoren zugänglich (z.B. EP-A-321 852, EP-A-384 264, EP-A-416 566).

Als Ausgangsprodukte eignen sich unter Verwendung von Ziegler- oder Metallocenkatalysatoren hergestellte niedrigmolekulare Propylen-Homopolymerisate mit Schmelzviskositäten, gemessen bei 170°C, von 20 bis 50000 mPa.s. Die Erweichungspunkte (Ring/Kugel) solcher Wachse liegen in der Regel zwischen 90 und 165°C, bevorzugt zwischen 90 und 145°C. In Frage kommen sowohl hochkristalline, durch einen hohen Anteil iso- oder syndiotaktischer Strukturen gekennzeichneter Produkte als auch solche mit niedriger Kristallinität und überwiegend ataktischem Aufbau. Der Kristallinitätsgrad von Propylen-Homopolymeren läßt sich in bekannter Weise durch entsprechende Auswahl des für die Polymerisation benutzten Katalysators sowie über die Polymerisationsbedingungen in breitem Rahmen variieren. Dies gilt insbesondere bei Verwendung von Metallocen-Katalysatorsystemen.

Als Ausgangsprodukte sind ferner mit Ziegler- oder Metallocenkatalysatoren hergestellte Propylen-Copolymer-Wachse geeignet, die neben Propylen mehr oder minder hohe Anteile an anderen Olefinen, beispielsweise Ethylen oder höhere α-Olefine im Kettenlängenbereich C₄-C₃₀ enthalten, wobei die Comonomereinheiten sowohl überwiegend statistisch als auch überwiegend blockartig - zwischen iso- oder syndio- oder teilweise ataktischen Polypropylensequenzen - verteilt sein können. Derartige Wachse zeigen Erweichungspunkte (Ring/Kugel) in der Regel zwischen ca. 90 und 165°C, bevorzugt zwischen 90 und 145°C.

Als polare Komponente eignen sich α,β-ungesättigte Carbonsäuren oder deren Derivate. Als Beispiele seien genannt Acrylsäure oder Methacrylsäure oder deren Ester oder Amide, Maleinsäure, Maleinsäureanhydrid, Halbester der Maleinsäure wie z.B. Monoalkylmaleate, Diester der Maleinsäure wie z.B. Dialkylmaleate oder Amide der Maleinsäure wie z.B. Maleinimid oder N-Alkyl-substituierte Maleinimide. Es können auch Gemische dieser Verbindungen verwendet werden. Bevorzugt sind Maleinsäure und ihre Abkömmlinge, besonders bevorzugt ist Maleinsäureanhydrid. Die polare Komponente kommt in einer Menge, bezogen auf Polypropylenwachs, von 0,1-20 Gew.% zum Einsatz.

Als Radikalbildner kommen Verbindungen in Frage, die unter den Reaktionsbedingungen in ausreichendem Maß zu Radikalen zerfallen. Geeignet sind insbesondere organische Peroxide, beispielsweise Alkyl-, Aryl- oder Aralkylperoxide wie Di-tert.-butylperoxid oder Dicumylperoxid, Peroxiester wie tert.-Butylperacetat oder tert.-Butylperbenzoat oder Hydroperoxide wie tert.-Butylhydroperoxid oder Cumolhydroperoxid. Weitere mögliche Radikalbildner sind aliphatische Azoverbindungen wie z.B. Azo-bis-(2-methylpropionitril) oder 2,2'-Azo-bis-(2,4-dimethylvaleronitril). Bevorzugt sind Dialkylperoxide, besonders bevorzugt ist Di-tert.-Butylperoxid. Der Radikalbildner kommt in einer Konzentration von, bezogen auf eingesetztes Polypropylenwachs, 0,1-5 Gew.-% zum Einsatz.

Die Umsetzung des Polypropylenwachses mit der polaren Komponente kann sowohl kontinuierlich als auch diskontinuierlich erfolgen. Beim diskontinuierlichen Vorgehen wird das Wachs auf eine Temperatur oberhalb seines Erweichungspunktes erhitzt und in die Schmelze wird sowohl die polare Komponente als auch das Peroxid unter Rühren eingetragen, gegebenenfalls unter Überlagerung mit Inertgas kontinuierlich über einen geeigneten Zeitraum verteilt oder in einer oder mehreren Portionen. Die Reaktionstemperatur liegt oberhalb der Erweichungstemperatur des Wachses, bevorzugt zwischen 100 und 200°C, besonders bevorzugt zwischen 130 und 180°C. Nach beendeter Dosierung kann sich - optional nach Zugabe einer zusätzlichen Menge Peroxid - eine Nachreaktion bei veränderter oder unveränderter Temperatur anschließen. Während der Reaktion gebildete flüchtige Anteile bzw. überschüssige flüchtige Ausgangskomponenten können beispielsweise im Vakuum abdestilliert und/oder durch Strippung mit Inertgas abgetrennt werden.

Die erfindungsgemäßen polaren Wachse weisen eine Säure- oder Verseifungszahl von 0,5 bis 120 mg KOH/g, eine Schmelzviskosität von 20-50000 mPa.s und einen Erweichungspunkt (Ring/Kugel) von 90-165°C, vorzugsweise von 90-145°C auf. Sie sind hellfarbig und homogen, ihre Schmelzviskosität ist im Vergleich zum eingesetzten Wachsrohstoff niedriger, höchstens etwa ähnlich, und sie sind frei von hochmolekularen oder vernetzten Anteilen.

Derartige polar modifizierten Polypropylenwachse haben eine Vielzahl von Anwendungsmöglichkeiten. Zu nennen sind die Verwendung in SchmelzkleberRezepturen, als Dispergiermittel für anorganische und organische Farbstoffe in Pigment-masterbatch-Zubereitungen zum Einfärben von Kunststoffen, als Trennmittel in Fototoner-Mischungen oder als Additive für die Kunststoffverarbeitung. Die Wachse können bei ausreichend hoher Polarität in Gegenwart üblicher Hilfsstoffe zu feinteiligen, stabilen wässrigen Dispersionen verarbeitet werden. Solche Dispersionen eignen sich als Rezepturkomponente z.B. in Fußboden-, Auto-, Möbel- und Schuhpflegemitteln sowie für die Anwendung in technischen Emulsionen, etwa für die Textilverarbeitung.

### Beispiele:

Die Schmelzviskosität der nachfolgend beschriebenen Wachsprodukte wurde mit einem Rotationsviskosimeter gemessen. Die Säure- und Verseifungszahlen wurden entsprechend der Vorschrift M-IV 2 (75) der "DGF-Einheitsmethoden - Abt. M - Wachse", die Erweichungspunkte (Ring/Kugel) entsprechend der ebenfalls dort niedergelegten Vorschrift M-III 13 (75) bestimmt. Schmelzwärmen wurden nach der DSC-Methode ermittelt.

### Beispiele 1-11: Modifizierung mit Maleinsäureanhydrid

500 g eines nach DE-A-2329641 hergestellten Polypropylenwachses mit einer Schmelzviskosität von 1950 mPa.s, gemessen bei 170°C, einem Erweichungspunkt von 159°C und einer Schmelzwärme von 83 J/g wurden in einer mit Rührwerk, Innenthermometer und Destillationbrücke ausgestatteten Glasapparatur unter Stickstoff-Überlagerung aufgeschmolzen. Bei einer Temperatur von 165°C wurden im Laufe von 3 h aus einem Dosiertrichter kontinuierlich 35,0 g auf ca. 60°C erwärmtes, flüssiges Maleinsäureanhydrid zudosiert; gleichzeitig erfolgte aus einem zweiten Tropftrichter die kontinuierliche Zugabe von 10,0 g Di-tert.-butylperoxid. Nach Ende der Dosierung gab man weitere 1,1 g Di-tert.-butylperoxid zu dem Reaktionsgemisch, erhöhte die Reaktionstemperatur auf 170°C und ließ 2 h nachreagieren. Anschließend legte man ein Vakuum von ca. 30 mbar an und destillierte die flüchtigen Anteile ab. Nach ca. 30 min wurde durch Einleiten von Stickstoff auf Normaldruck entspannt. Man leitete zur Abtrennung flüchtiger Restanteile noch 15 min Stickstoff durch die Wachsschmelze und goß diese aus. Man erhielt ein hellgelbes Wachs mit den in Tab. 1 unter Beispiel 1 aufgeführten Daten.

Die Beispiele 2 und 3 sind Wiederholungen von Beispiel 1 zur Überprüfung der Reproduzierbarkeit.

### Vergleichsbeispiel 1:

Modifizierung eines durch thermischen Abbau aus Polypropylen-Kunststoff hergestellten Wachses mit Maleinsäureanhydrid.

Ein aus homopolymerem Polypropylen-Kunststoff mit einem MFI_{230/2.16}-Wert von 22 g/10 min und einem Kristallitschmelzpunkt von 165°C durch thermischen Abbau bei 350°C gewonnenes Wachs mit einer Schmelzviskosität von 1850 mPa.s/170°C und einem Erweichungspunkt (Ring/Kugel) von 162°C wurde entsprechend Beispiel 1 mit Maleinsäureanhydrid umgesetzt. Die Viskosität des Reaktionsgemisches stieg laufend an; ca. 4 h nach Beginn der Dosierung von Maleinsäureanhydrid und Di-tert.-butylperoxid war der Ansatz vollständig vernetzt, so daß die Reaktion abgebrochen werden mußte.

### Vergleichsbeispiel 2 und 3:

Maleinsäureanhydrid-Modifizierung von Epolene® N-15 (Polypropylen-Abbauwachs der Fa. Eastman Chem. Corp. mit einer Schmelzviskosität von ca. 600 mPa.s bei 190°C und einem Erweichungspunkt von 163°C):

Die Umsetzung mit Maleinsäureanhydrid erfolgte analog Beispiel 1. Das erhaltene modifizierte Wachs weist eine Säurezahl von 40 mg KOH/g und eine Schmelzviskosität von 4030 mPa.s/170°C auf. Ein zweiter, unter Verwendung des gleichen Rohstoffs und unter gleichen Bedingungen durchgeführter Versuch lieferte ein modifiziertes Wachs mit einer Säurezahl von 41 mg KOH/g und einer Schmelzviskosität von 8680 mPa.s/170°C.

### Vergleichsbeispiel 4:

### Modifizierung eines Polypropylen-Abbauwachses mit Maleinsäureanhydrid.

Aus einem copolymeren PP-Kunststoff mit einem MFI_{230/2,16}-Wert von 7 g/10 min und einem Kristallitschmelzpunkt von 144°C wurde durch thermische Behandlung bei 450°C unter Inertisierung mit Stickstoff ein Abbauwachs mit einer Viskosität von 350 mPa.s bei 170°C und einem Erweichungspunkt von 152°C hergestellt. Das Abbauwachs wurde in gleicher Weise wie in Beispiel 1 angegeben mit Maleinsäureanhydrid umgesetzt. Die Reaktion mußte nach 2 h abgebrochen werden, da der Kolbeninhalt vernetzt war und nicht mehr gerührt werden konnte.

### Beispiel 12:

### Modifizierung mit Acrylsäure.

500 g des in den Beispielen 1-5 eingesetzten Ziegler-Homopolymerwachses wurde in einer mit Rührwerk, Innenthermometer und Destillationsbrücke ausgestatteten Glasapparatur unter Stickstoff-Überlagerung aufgeschmolzen. Bei einer Temperatur von 160°C wurde im Laufe von 4 h aus einem Dosiertrichter kontinuierlich ein Gemisch aus 50,0 g Acrylsäure und 10,0 g Di-tert.-butylperoxid zudosiert. Nach Ende der Dosierung ließ man noch 1 h nachregieren. Anschließend legt man Vakuum an und destilliert die flüchtigen Anteile ab. Nach ca. 30 min wurde durch Einleiten von Stickstoff auf Normaldruck entspannt. Das erhaltene hellgelbe Wachs zeigte eine Säurezahl von 52 mg KOH/g, eine Schmelzviskosität von 580 mPa.s und einen Erweichungspunkt von 146°C.

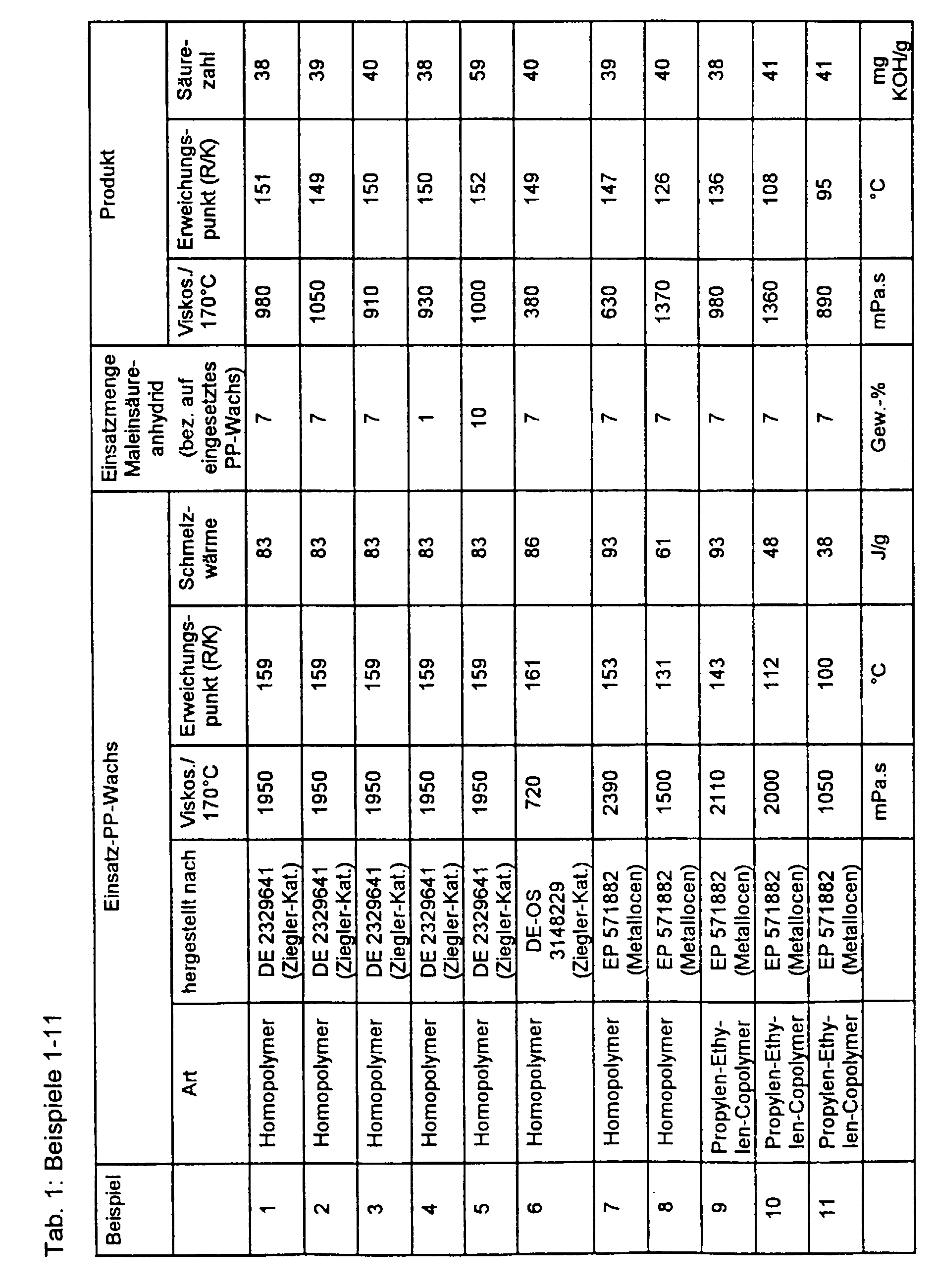

## Patentansprüche

1. Polar modifiziertes teilkristallines Propylen-Homo- oder Copolymerwachs mit einer Säure- oder Verseifungszahl von 0,5 bis 120 mg KOH/g, einer Schmelzviskosität von 20 bis 50000 mPa.s/170°C und einem Erweichungspunkt (Ring/Kugel) von 90 bis 165°C, hergestellt durch Umsetzung eines unpolaren Propylen-Homo- oder Copolymerwachses mit **0,1-20 Gew.-%, bezogen auf das Polypropylenwachs,** einer α,β-ungesättigten Carbonsäure oder deren Derivaten in Gegenwart von **0,1-5 Gew.-%, bezogen auf das Polypropylenwachs,** Radikalbildnern, dadurch gekennzeichnet, daß das unpolare Polypropylenwachs durch direkte Polymerisation von Propylen oder Copolymerisation von Propylen mit höheren 1-Olefinen unter Verwendung von Katalysatoren des Ziegler- oder Metallocentyps hergestellt wurde und einen Erweichungspunkt (Ring/Kugel) von 90 bis 165°C aufweist.

2. Polar modifiziertes teilkristallines Propylen-Homopolymerwachs mit einer Säure- oder Verseifungszahl von 0,5 bis 120 mg KOH/g, einer Schmelzviskosität von 20 bis 50000 mPa.s/170°C und einem Erweichungspunkt (Ring/Kugel) von 90 bis 165°C, hergestellt durch Umsetzung eines unpolaren Propylen-Homopolymerwachses mit **0,1-20 Gew.-%, bezogen auf das Polypropylenwachs,** einer α,β-ungesättigten Carbonsäure oder deren Derivaten in Gegenwart von **0,1-5 Gew.-%, bezogen auf das Polypropylenwachs,** Radikalbildnern, dadurch gekennzeichnet, daß das unpolare Polypropylenwachs durch direkte Polymerisation von Propylen unter Verwendung von Katalysatoren des Ziegler- oder Metallocentyps hergestellt wurde und einen Erweichungspunkt (Ring/Kugel) von 90 bis 165°C aufweist.

3. Polar modifiziertes teilkristallines Propylen-Homo- oder Copolymerwachs mit einer Säure- oder Verseifungszahl von 0,5 bis 120 mg KOH/g, einer Schmelzviskosität von 20 bis 50000 mPa.s/170°C und einem Erweichungspunkt (Ring/Kugel) von 90 bis 145°C, hergestellt durch Umsetzung eines unpolaren Propylen-Homo- oder Copolymerwachses mit **0,1-20 Gew.-%, bezogen auf das Polypropylenwachs,** einer α,β-ungesättigten Carbonsäure oder deren Derivaten in Gegenwart von **0,1-5 Gew.-%, bezogen auf das Polypropylenwachs,** Radikalbildnern, dadurch gekennzeichnet, daß das unpolare Polypropylenwachs durch direkte Polymerisation von Propylen oder Copolymerisation von Propylen mit höheren 1-Olefinen unter Verwendung von Katalysatoren des Ziegler- oder Metallocentyps hergestellt wurde und einen Erweichungspunkt (Ring/Kugel) von 90 bis 145°C aufweist.

4. Polar modifiziertes teilkristallines Propylen-Homopolymerwachs mit einer Säure- oder Verseifungszahl von 0,5 bis 120 mg KOH/g, einer Schmelzviskosität von 20 bis 50000 mPa.s/170°C und einem Erweichungspunkt (Ring/Kugel) von 90 bis 145°C, hergestellt durch Umsetzung eines unpolaren Propylen-Homopolymerwachses mit **0,1-20 Gew.-%, bezogen auf das Polypropylenwachs,** einer α,β-ungesättigten Carbonsäure oder deren Derivaten in Gegenwart von **0,1-5 Gew.-%, bezogen auf das Polypropylenwachs,** Radikalbildnern, dadurch gekennzeichnet, daß das unpolare Polypropylenwachs durch direkte Polymerisation von Propylen unter Verwendung von Katalysatoren des Ziegler- oder Metallocentyps hergestellt wurde und einen Erweichungspunkt (Ring/Kugel) von 90 bis 145°C aufweist.

5. Verwendung der Wachse gemäß den Ansprüchen 1 bis 4 für wäßrige Dispersionen, für Schmelzkleberrezepturen oder als Kunststoffadditive.

## Claims

1. A partially crystalline polypropylene homopolymer or copolymer wax modified so as to be polar and having an acid or saponification number of from 0.5 to 120 mg KOH/g, a melt viscosity of from 20 to 50,000 mPa.s/ 170°C and a softening point (ring/ball) of from 90 to 165°C, prepared by reacting a nonpolar polypropylene homopolymer or copolymer wax with 0.1-20% by weight, based on the polypropylene wax, of an α,β-unsaturated carboxylic acid or a derivative thereof in the presence of 0.1-5% by weight, based on the polypropylene wax, of free-radical formers, wherein the nonpolar polypropylene wax has been prepared by direct polymerization of propylene or copolymerization of propylene with higher 1-olefins using catalysts of the Ziegler or metallocene type and has a softening point (ring/ball) of from 90 to 165°C.

2. A partially crystalline polypropylene homopolymer wax modified so as to be polar and having an acid or saponification number of from 0.5 to 120 mg KOH/g, a melt viscosity of from 20 to 50,000 mPa.s/170°C and a softening point (ring/ball) of from 90 to 165°C, prepared by reacting a nonpolar polypropylene homopolymer wax with 0.1-20% by weight, based on the polypropylene wax, of an α,β-unsaturated carboxylic acid or a derivative thereof in the presence of 0.1-5% by weight, based on the polypropylene wax, of free-radical formers, wherein the nonpolar polypropylene wax has been prepared by direct polymerization of propylene using catalysts of the Ziegler or metallocene type and has a softening point (ring/ball) of from 90 to 165°C.

3. A partially crystalline polypropylene homopolymer or copolymer wax modified so as to be polar and having an acid or saponification number of from 0.5 to 120 mg KOH/g, a melt viscosity of from 20 to 50,000 mPa.s/ 170°C and a softening point (ring/ball) of from 90 to 145°C, prepared by reacting a nonpolar polypropylene homopolymer or copolymer wax with 0.1-20% by weight, based on the polypropylene wax, of an α,β-unsaturated carboxylic acid or a derivative thereof in the presence of 0.1-5% by weight, based on the polypropylene wax, of free-radical formers, wherein the nonpolar polypropylene wax has been prepared by direct polymerization of propylene or copolymerization of propylene with higher 1-olefins using catalysts of the Ziegler or metallocene type and has a softening point (ring/ball) of from 90 to 145°C.

4. A partially crystalline polypropylene homopolymer wax modified so as to be polar and having an acid or saponification number of from 0.5 to 120 mg KOH/g, a melt viscosity of from 20 to 50,000 mPa.s/170°C and a softening point (ring/ball) of from 90 to 145°C, prepared by reacting a nonpolar polypropylene homopolymer wax with 0.1-20% by weight, based on the polypropylene wax, of an α,β-unsaturated carboxylic acid or a derivative thereof in the presence of 0.1-5% by weight, based on the polypropylene wax, of free-radical formers, wherein the nonpolar polypropylene wax has been prepared by direct polymerization of propylene using catalysts of the Ziegler or metallocene type and has a softening point (ring/ball) of from 90 to 145°C.

5. The use of the waxes as claimed in any of claims 1 to 4 for aqueous dispersions, for melt adhesive formulations or as plastics additives

## Revendications

1. Cire propylénique homopolymère ou copolymère partiellement cristalline, à polarité modifiée, ayant un indice d'acide ou de saponification de 0,5 à 120 mg KOH/g, une viscosité à chaud de 20 à 50000 mPa·s/170°C et un point de ramollissement (anneau/bille) de 90 à 165°C, préparée par réaction d'une cire propylénique homo- ou copolymère non polaire, **avec 0,1 à 20% en masse, par rapport à la cire polypropylénique,** d'un acide carboxylique insaturé en α,β ou ses dérivés, en présence de **0,1 à 5% en masse, par rapport à la cire polypropylénique,** de formateurs de radicaux, caractérisée en ce qu'on prépare la cire polypropylénique non polaire par polymérisation directe du propylène ou copolymérisation du propylène avec des 1-oléfines supérieures en utilisant des catalyseurs du type ziegler ou métallocène, et présente un point de ramollissement (anneau/bille) de 90 à 165°C.

2. Cire propylénique homopolymère, partiellement cristalline, à polarité modifiée, ayant un indice d'acide ou de saponification de 0,5 à 120 mg KOH/g, une viscosité à chaud de 20 à 50000 mPa·s/170°C et un point de ramollissement (anneau/bille) de 90 à 165°C, préparée par réaction d'une cire propylénique homopolymère non polaire avec **0,1 à 20% en masse, par rapport à la cire polypropylénique,** d'un acide carboxylique insaturé en α,β ou ses dérivés, en présence de **0,1 à 5% en masse, par rapport à la cire polypropylénique,** de formateurs de radicaux, caractérisée en ce qu'on prépare la cire polypropylénique non polaire par polymérisation directe du propylène en utilisant des catalyseurs du type ziegler ou métallocène, et présente un point de ramollissement (anneau/bille) de 90 à 165°C.

3. Cire propylénique homopolymère ou copolymère, partiellement cristalline, à polarité modifiée, ayant un indice d'acide ou de saponification de 0,5 à 120 mg KOH/g, une viscosité à chaud de 20 à 50000 mPa·s/170°C et un point de ramollissement (anneau/bille) de 90 à 145°C, préparée par réaction d'une cire propylénique homopolymère ou copolymère non polaire avec **0,1 à 20% en masse, par rapport à la cire polypropylénique,** d'un acide carboxylique insaturé en α,β ou ses dérivés, en présence de **0,1 à 5% en masse, par rapport à la cire polypropylénique,** de formateurs de radicaux, caractérisée en ce qu'on prépare la cire polypropylénique non polaire par polymérisation directe du propylène ou copolymérisation du propylène avec des 1-oléfines supérieures en utilisant des catalyseurs du type Ziegler ou métallocène, et présente un point de ramollissement (anneau/bille) de 90 à 145°C.

4. Cire propylénique homopolymère, partiellement cristalline, à polarité modifiée, ayant un indice d'acide ou de saponification de 0,5 à 120 mg KOH/g, une viscosité à chaud de 20 à 50000 mPa·s/170°C et un point de ramollissement (anneau/bille) de 90 à 145°C, préparée par réaction d'une cire propylénique homopolymère non polaire avec **0,1 à 20% en masse, par rapport à la cire polypropylénique,** d'un acide carboxylique insaturé en α,β ou ses dérivés, en présence de **0,1 à 5% en masse, par rapport à la cire polypropylénique,** de formateurs de radicaux, caractérisée en ce qu'on prépare la cire polypropylénique non polaire par polymérisation directe du propylène en utilisant des catalyseurs du type Ziegler ou métallocène, et présente un point de ramollissement (anneau/bille) de 90 à 145°C.

5. Utilisation de la cire selon les revendications 1 à 4 dans des dispersions aqueuses, des formulations de colle fusibles ou comme additifs de matières plastiques.
